# EUROPEAN PATENT APPLICATION

(11) **EP 2 921 937 A1**
(43) Date of publication of application: **23.09.2015**
(21) Application number: 15150952.8
(22) Date of filing: 13.01.2015
(51) Int. Cl.: G06F 3/01, G06F 3/0482

(54) **MULTIMEDIA APPARATUS, METHOD OF CONTROLLING MULTIMEDIA APPARATUS, AND PROGRAM OF CONTROLLING MULTIMEDIA APPARATUS**

(30) Priority: 17.03.2014 JP 2014053467
(71) Applicant: OMRON CORPORATION, Kyoto-shi, Kyoto 600-8530 (JP)
(72) Inventor: Tanaka, Kiyoaki, Kyoto-shi, Kyoto 600-8530 (JP); Yamashita, Takayoshi, Kyoto-shi, Kyoto 600-8530 (JP); Furuta, Mizuki, Kyoto-shi, Kyoto 600-8530 (JP)
(74) Representative: Kilian Kilian & Partner

(57) **Abstract**

Menu-set operation control unit provides an instruction for displaying a menu set, when the received manipulation instruction matches with a first manipulation. The unit provides an instruction for changing a selection state of a first-level option in the menu set, when the manipulation instruction matches with a second manipulation. The unit provides, when the manipulation instruction matches with a third manipulation, an instruction for changing a selection state of a second-level option, which is of a narrower concept than a first-level option currently selected. The unit provides an instruction for determining the second-level option, when the manipulation instruction matches with a fourth manipulation. The menu set is on the display such that a name of the first-level option indicating a function of the multimedia apparatus is displayed in a center, and a name of the second-level option, which is of the narrower concept than the first-level option is displayed.

## Description

### FIELD OF THE INVENTION

The invention relates to a multimedia apparatus, a method of controlling the multimedia apparatus, and a program of controlling the multimedia apparatus.

### BACKGROUND

In recent years, interface techniques used to receive manipulation instructions from a user have been developed for a multimedia device that handles media such as moving images, sounds, still images, and characters. For example, one type of such interface is configured to display a menu on a display device and to prompt a user to make a selection from the menu. For example, Patent Documents 1 to 4 disclose information input techniques using such an interface.

Japanese Patent Application Publication No. H8-123647 (Patent Document 1) discloses an information processing apparatus that provides a circular button for displaying a menu. In this apparatus, options in the menu are arranged in a circle outside a circular button. The size of the shape of each option in the menu changes according to the number of times the option in the menu is used. When the options in the menu are layered at two or more levels, lower-level options are arranged like a fan outside a higher-level option.

International Patent Application Publication No. WO2008/029467 (Patent Document 2) discloses a system that performs matching against templates for recognizing motions of a user, and thereby outputs a matched event to manipulate an object. The object includes a pie menu having menu options arranged in a circle. A user can select a desired menu option from the pie menu by adjusting an angle of a twisted wrist.

Japanese Patent Application Publication No. 2004-356774 (Patent Document 3) discloses a reproducing apparatus that displays what is termed a crossbar menu. In this apparatus, a display control unit generates image data of a menu screen, in a two-dimensional array including a function icon array and a first icon vertical array. In the function icon array, function icons are laterally arranged on the screen. In the first icon vertical array, folder icons are vertically arranged on the screen above and below the function icon in an intersection region. The display control unit determines which of a physical view and a logic view is set as a display mode of the menu screen, and generates image data according to the set display mode.

Japanese Patent Application Publication No. 2006-004292 (Patent Document 4) discloses a technique for modifying the above crossbar menu in which a moving-image icon which is a function icon displayed in a region of intersection between a function icon array and a content icon array is enlarged in a color different from those of the other function icons. The content icon array visually represents a hierarchy of contents.

### SUMMARY

However, in the technique according to Patent Document 1, a region for displaying characters is small when the number of lower level options is large. Therefore, there is a limit to the number of options in the menu. In the technique according to Patent Document 2, there is only one level for the menu options and therefore, complicated manipulation cannot be supported. In the techniques according to Patent Documents 3 and 4, lower-level options are displayed only after selection of a function icon that is a higher-level option, which causes a problem in that it is difficult to see the whole picture.

When many kinds of manipulation are necessary as in the case of televisions, for example, having a variety of functions and having become widespread rapidly in recent years, the above-described conventional documents cannot cover all of such manipulation as described above. Attempting to support these many kinds of complicated manipulation makes the displayed options small or poor in appearance.

A multimedia apparatus according to an embodiment includes: a storage unit configured to store a correspondence between a type of a manipulation instruction to be provided by a user and processing to be performed by the multimedia apparatus when the manipulation instruction is provided; a menu-set operation control unit configured to receive directly or indirectly the manipulation instruction provided by the user, to provide an instruction for displaying a menu set, when the received manipulation instruction matches with a first manipulation stored in the storage unit, to provide an instruction for changing a selection state of a first-level option in the menu set, when the manipulation instruction matches with a second manipulation stored in the storage unit, to provide, when the manipulation instruction matches with a third manipulation stored in the storage unit, an instruction for changing a selection state of a second-level option which is of a narrower concept than a first-level option being currently selected, and to provide an instruction for determining the second-level option, when the manipulation instruction matches with a fourth manipulation stored in the storage unit; a command generation unit configured to control display in response to the instruction provided by the menu-set operation control unit, and to generate a command for causing operation or display related to the determined second-level option; and a display unit configured to perform the operation or display based on the command generated by the command generation unit. The menu set is electronically rendered on the display unit such that a name of the first-level option indicating a function of the multimedia apparatus is displayed in a center, and a name of the second-level option which is of the narrower concept than the first-level option is displayed around the center.

### BRIEF DESCRIPTION OF DRAWINGS

Fig. 1 is a block diagram illustrating a multimedia apparatus according to a first embodiment.
Fig. 2 is a block diagram illustrating a multimedia apparatus according to a second embodiment.
Fig. 3 is a diagram illustrating an example of displaying a menu set.
Fig. 4 is a diagram illustrating an example of a screen transition when a television is used as an embodiment.
Fig. 5 is a flowchart according to the first embodiment.
Fig. 6 is a schematic diagram of an input device according to the second embodiment.
Fig. 7 is a flowchart according to the second embodiment.
Fig. 8 is a diagram illustrating another example of displaying the menu set.
Fig. 9 is a diagram illustrating yet another example of displaying the menu set.
Fig. 10 is an example of displaying a case in which a menu set related to one first-level option is selected from menu sets.
Fig. 11 is another example of displaying a case in which a menu set related to one first-level option is selected from menu sets.
Fig. 12 is yet another example of displaying a case in which a menu set related to one first-level option is selected from menu sets.
Fig. 13 is a table according to data stored in a storage unit 106 or 206.
Fig. 14 is an example of displaying a menu set in which a frequently selected second-level option is arranged at an easy-to-select position.

### DETAILED DESCRIPTION

Embodiments are described below with reference to the drawings. When referring to the drawings, the same or similar parts are provided with the same or similar symbols, and redundant description thereof is avoided. All the drawings are schematic, and each dimensional ratio and the like are not limited to these embodiments. Therefore, specific dimensions and the like are to be determined considering the following description. In addition, the drawings may each include parts having a dimensional relationship or ratio different from those in other drawings.

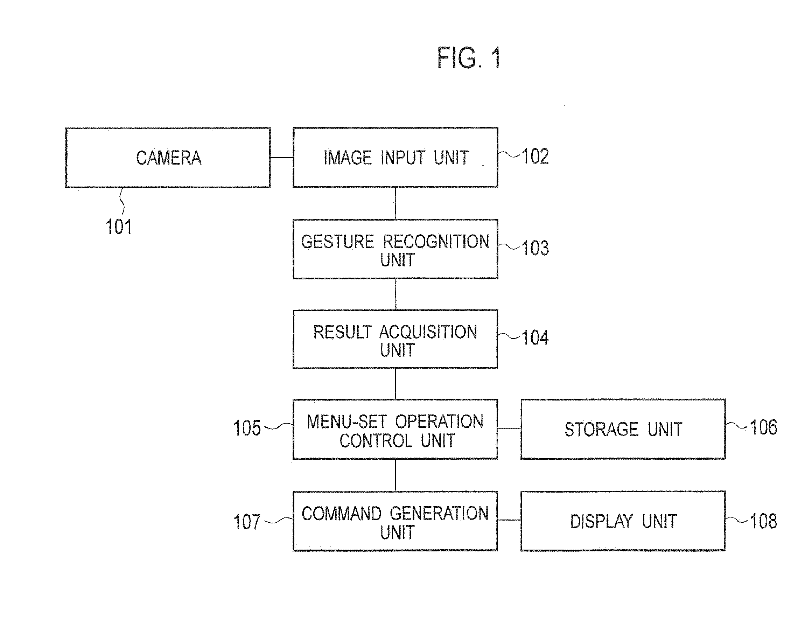

Fig. 1 is a block diagram illustrating a multimedia apparatus according to a first embodiment. This multimedia apparatus includes camera 101, image input unit 102, gesture recognition unit 103, result acquisition unit 104, menu-set operation control unit 105, storage unit 106, command generation unit 107, and display unit 108.

The multimedia apparatus of the present embodiment receives a manipulation instruction of a user, and performs various kinds of manipulation based on the manipulation instruction inputted by the user. Here, the present embodiment uses a gesture of the user as the manipulation instruction of the user.

Camera 101 captures an image of a subject (a recognition target) serving as a target of gesture recognition, and outputs a signal (e.g., a composite signal in a system such as NTSC) based on the captured image. Specifically, camera 101 may mainly include a frame memory, a mechanical structure, and motors. The motors may include a zoom lens motor, a focus motor, and a shutter motor. An image pick-up device of camera 101 takes an image of a subject by photoelectric conversion or the like, and generates a moving-image signal based on the taken image. Examples of the image pick-up device include various kinds of device such as a charge-coupled device (CCD) and a complementary metal oxide semiconductor (CMOS).

Image input unit 102 acquires the moving-image signal outputted from camera 101, and outputs moving-image data based on the acquired moving-image signal. Here, the signal from camera 101 maybe directly inputted to gesture recognition unit 103 to be described later. In this case, gesture recognition unit 103 may recognize a gesture directly from the composite signal or the like from camera 101, or may recognize a gesture after performing data conversion.

Gesture recognition unit 103 acquires the moving-image data from image input unit 102, and recognizes a shape and a motion (a gesture) of the subject based on the acquired moving-image data. In the present embodiment, a hand is a recognition target, and further, a shape and a motion of a finger are captured as a recognition target in gesture recognition processing, but this is not limitative. A shape and/or a motion of any recognizable subject can be used as a gesture.

Here, gesture recognition unit 103 may include, for example, a barycenter tracking section, a moving-speed determination section, a movement-pattern extraction section, and a start/end determination section. The barycenter tracking section detects a specific subject (a hand or the like) having a specific characteristic appearing in a moving image. The moving-speed determination section calculates a moving speed per hour of the specific subject. The movement-pattern extraction section extracts a movement pattern of the specific subj ect. When the moving speed and the movement pattern satisfy predetermined conditions, the start/end determination section recognizes a motion of the specific subject as a manipulation instruction (such as an instruction for starting or ending the gesture recognition processing) inputted to the apparatus including this section.

A gesture recognition technique that can be used in the present embodiment is disclosed in Japanese Patent Application Publication No. 2011-192090, Japanese Patent No. 5024495, Japanese Patent Application Publication No. 2013-65111, or Japanese Patent Application Publication No. 2013-65112. The gesture recognition technique is incorporated with reference to these documents.

Result acquisition unit 104 acquires the type of the gesture recognized by gesture recognition unit 103. Here, result acquisition unit 104 may be omitted if the type of the gesture recognized by gesture recognition unit 103 is directly outputted to menu-set operation control unit 105 to be described later.

Menu-set operation control unit 105 performs various kinds of control, based on the type of the gesture, acquired by result acquisition unit 104. In other words, menu-set operation control unit 105 recognizes a manipulation instruction of the user based on the acquired type of the gesture, thereby controlling operation or display of the multimedia apparatus. The control performed in the multimedia apparatus of the present embodiment includes calling a menu set to be displayed on display 108 described later, changing a selection state of a first-level option, changing a selection state of a second-level option, determining a manipulation instruction, and the like. Here, the control may be performed based on information stored in storage unit 106 as necessary.

Storage unit 106 stores various kinds of data to be handled by menu-set operation control unit 105. Storage unit 106 may include a temporary storage section that stores storing data in a volatile manner, and a read-only storage section that stores data in a non-volatile manner. The temporary storage section is a so-called working memory that temporarily stores data to be used for computations, computation results, and the like, in a process in which menu-set operation control unit 105 executes various kinds of processing. This temporary storage section includes a readable and writable storage device, e.g., a RAM. The read-only storage section stores a control program to be executed by menu-set operation control unit 105 and an operating system (OS). The read-only storage section also stores various kinds of data to be read by menu-set operation control unit 105 to perform various kinds of functions. This read-only storage section includes, for example, a ROM. Storage unit 106 of the present embodiment stores a correspondence between the type of a manipulation instruction provided by a user, and the processing to be performed by the multimedia apparatus when the manipulation instruction is provided.

Command generation unit 107 generates a command for displaying a menu set controlled by menu-set operation control unit 105, on display unit 108 to be described later. Further, command generation unit 107 generates a command for controlling the multimedia apparatus, based on a result of the control by menu-set operation control unit 105. For example, when the multimedia apparatus is a television, the multimedia apparatus is controlled to perform switching to a medium to be displayed, switching of a broadcast program, changing of a sound volume, and the like.

Based on the control of command generation unit 107, display unit 108 displays a menu set, or a content corresponding to a manipulation instruction determined in the menu set, e.g., a broadcast program after switching. Display unit 108 may be any type of unit if the unit displays an image based on the control of command generation unit 107. Examples of display unit 108 include a liquid crystal display (LCD), an organic EL display, and a plasma display.

Here, the multimedia apparatus of the present embodiment is not limited to handling display-related manipulation instructions from the user, such as a manipulation instruction for displaying a menu set and a manipulation instruction determined in the menu set. The multimedia apparatus of the present embodiment is also applicable to handling other type of manipulation instruction. Examples of such other type of manipulation instruction include a manipulation instruction for turning off the multimedia apparatus and a manipulation instruction for turning up/down the volume of the multimedia apparatus.

Further, the multimedia apparatus may not include camera 101. In this case, a communication unit (not illustrated) of the multimedia apparatus communicates with an external camera provided separately, via a communications network. The multimedia apparatus may acquire a moving image from the external camera via the communication unit.

The multimedia apparatus of the present embodiment may be included in a television having a receiver configured to offer video images, sounds and others to the user by receiving radio waves and signals. In other words, the television may incorporate the multimedia apparatus of the present embodiment. The multimedia apparatus is not limited to this example of being included in the television. For example, a mobile phone, a smartphone, a game console, a digital camera, a security gate (a door), and the like may incorporate the multimedia apparatus of the present embodiment.

Specific users or any number of unspecified users may use the multimedia apparatus of the present embodiment. For example, in a place such as a hospital, there are a large number of unspecified users, but manipulation by directly a touching device is not desirable in some cases. Therefore, in an environment such as a hospital, a gesture recognition apparatus can be suitably used for manipulation of an electronic device. Here, the user represents a person who operates the multimedia apparatus, or a person who attempts to operate the multimedia apparatus.

Each process of the multimedia apparatus of the present embodiment is implemented as follows. A central processing unit (CPU) reads a program stored in a storage device implemented by a read only memory (ROM) or the like, into the temporary storage section such as a random access memory (RAM) not illustrated. The CPU then executes the read program, to perform the processing.

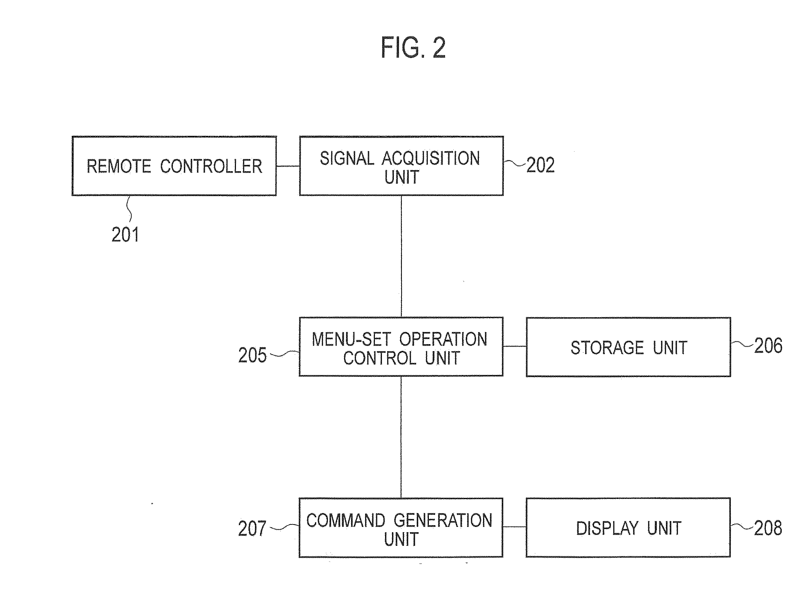

Fig. 2 is a block diagram illustrating a multimedia apparatus according to a second embodiment. The multimedia apparatus of the present embodiment includes remote controller 201, signal acquisition unit 202, menu-set operation control unit 205, storage unit 206, command generation unit 207, and display unit 208.

The multimedia apparatus of the present embodiment receives a manipulation instruction from a user, by using remote controller 201. Upon receipt of a manipulation instruction from the user, remote controller 201 transmits a signal to signal acquisition unit 202. Signal acquisition unit 202 receives the signal from remote controller 201. Communication with remote controller 201 maybe wire or wireless communication. In the case of wire communication, signal acquisition unit 202 and remote controller 201 are connected with a cable. Signal acquisition unit 202 acquires a signal from remote controller 201 via the cable. In the case of wireless communication, an infrared (IR) system or a radio frequency (RF) electromagnetic wave system may be used. Further, this remote controller 201 may be integral with the multimedia apparatus. Specifically, the multimedia apparatus may include an input unit, so that the user inputs a manipulation instruction by operating the input unit. Therefore, the multimedia apparatus may receive an input from the user directly or indirectly, by using remote controller 201.

Menu-set operation control unit 205 performs various kinds of control based on the signal acquired by signal acquisition unit 202. In other words, menu-set operation control unit 205 performs the control including calling a menu set to be displayed on display 208 described later, changing a selection state of a first-level option, changing a selection state of a second-level option, and determining a manipulation instruction. Here, the control may be performed based on information stored in storage unit 206 as necessary.

Command generation unit 207 performs control for displaying a menu set controlled by menu-set operation control unit 205, on display unit 208 to be described later. Further, based on a result of the control by menu-set operation control unit 205, display unit 208 performs operation such as switching to a medium or broadcast program to be displayed, when the multimedia apparatus is a television.

Based on the control of command generation unit 207, display unit 208 displays a menu set, or a content corresponding to a manipulation instruction determined in the menu set, e.g., a broadcast program selected by the user.

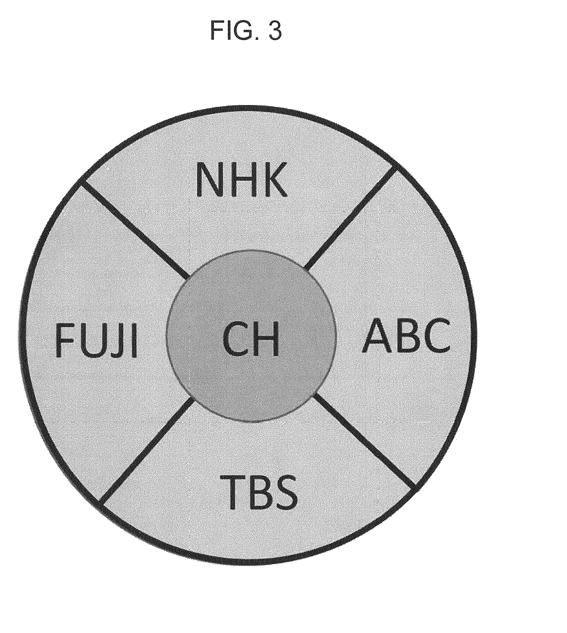

Fig. 3 is a diagram illustrating an example of displaying the menu set. Here, the menu set of the first embodiment is electronically rendered on display unit 108 and presents options to the user. This menu set displays a first-level option and a second-level option. The menu set in the present embodiment displays the first-level option in the center and the second-level option around the first-level option. Here, the first-level option is of a wider concept of user-selectable functions of the multimedia apparatus. The second-level option is of a narrower concept than the first-level option. The menu set in Fig. 3 displays "CH", namely, channel, in a central circle, as the first-level option. An outer circle is further provided around the central circle. The outer circle is divided into segments each displaying the second-level option of the channel serving as the first-level option. In the present embodiment, broadcast stations such as "NHK", "ABC", "TBS", and "FUJI" are each displayed as the second-level option.

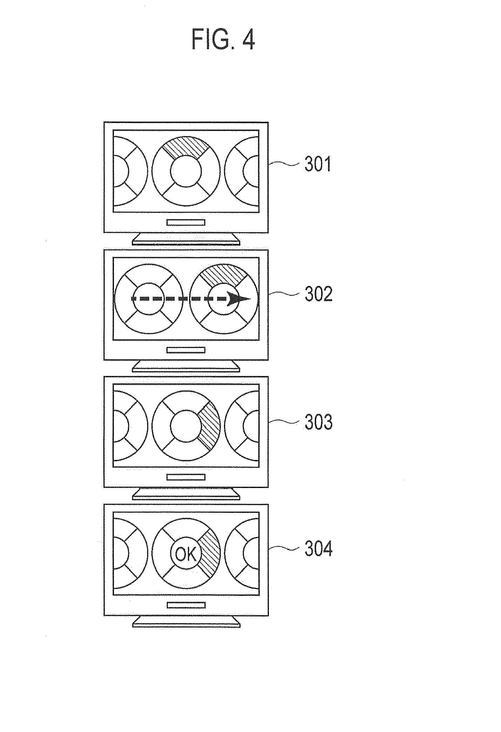

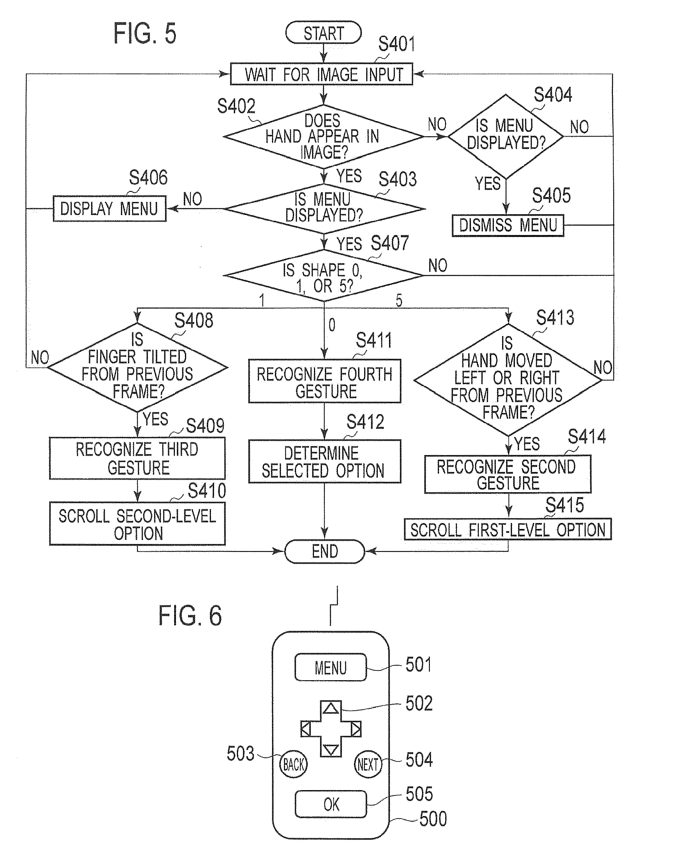

Next, operation of the multimedia apparatus of the present embodiment is described using Figs. 4 and 5. Fig. 4 is a diagram illustrating an example of a screen transition when a television is used as an embodiment. Fig. 5 is a flowchart illustrating an embodiment of a gesture of the user when the screen transition in Fig. 4 is performed.

First, a menu screen such as screen 301 in Fig. 4 is displayed. Here, two or more menu sets may be displayed as illustrated in screen 301, or one menu set may be displayed. The example represented by screen 301 displays a currently selected menu set in the center of the display unit, and also partially displays previous and subsequent menu sets on the right and the left of the currently selected menu set, respectively. The way of displaying the menu set is not limited to this example. One menu set may be displayed in the screen, to present only the currently selected menu set.

Next, the selection state of the first-level option in the menu set changes as illustrated in screen 302. This change of the selection state includes display switching of the menu set. For example, when two or more menu sets are displayed, the display switching may be performed to display a newly selected menu set in the center of the display unit by scrolling the displayed menu sets. Afterwards, the selection state of the second-level option changes as illustrated in screen 303. Finally, selection of the second-level option is determined as illustrated in screen 304.

Fig. 5 is a flowchart illustrating operation of the multimedia apparatus in the first embodiment illustrated in Fig. 1, in connection with the example of the screen transition in Fig. 4.

For example, the multimedia apparatus repeats this operation at predetermined time intervals, while remaining turned on.

First, the multimedia apparatus waits until the user provides a manipulation instruction (step S401). This state is referred to as a standby state. Next, the multimedia apparatus determines whether there is a hand in an image (step S402). When there is a hand in the image, the multimedia apparatus determines whether a menu set is displayed (step S403). When the menu set is not displayed, the multimedia apparatus displays a menu set as illustrated in screen 301 of Fig. 4 (step S406) and returns to the standby state. On the other hand, when determining that there is no hand in the image in step S402, the multimedia apparatus determines whether a menu set is displayed (step S404). When the menu set is displayed, the multimedia apparatus dismisses the displayed menu set (step S405), and returns to the standby state.

Here, in the present embodiment, only whether there is a hand in an image is determined in step S402, but this is not limitative. It may be determined whether a hand is formed into a specific shape or whether a specific motion is made by the user. Assume that the user makes a gesture of opening all fingers of a hand, e.g., a gesture of straightening the five fingers by opening a hand. The menu set may be displayed by recognizing this gesture as a first gesture.

Next, when determining that the menu set is displayed in step S403, the multimedia apparatus then determines a shape or a motion of the hand (step S407). Here, in the present embodiment, the multimedia apparatus determines an open-hand state (state 5), an only-one-finger-straight state (state 1), and a closed-hand state (state 0).

When determining the state 5 in step S407, and when determining that the hand is shifted to the right or left from a state in a previous frame (step S413), the multimedia apparatus recognizes this result as a second gesture (step S414). When recognizing the second gesture, the multimedia apparatus changes the selection state of the first-level option (scrolls the first-level option) in the menu set (step S415), as illustrated in screen 302 of Fig. 4.

Specifically, as illustrated in screen 302 of Fig. 4, the type of a medium to be displayed is selected as a selected first-level option. Here, the types of media include the Internet, digital terrestrial broadcasting, analog terrestrial broadcasting, Broadcasting Satellite (BS), Cable Television (CATV), and Communications Satellite (CS). Further, media players connected to the multimedia apparatus, such as a Digital Versatile Disk (DVD) player and a Blu-ray player, as well as external storage media such as an SD card may be included as the selectable first-level options. The multimedia apparatus changes the selection state of the first-level option in the menu set, based on the second gesture of the user. When, for example, the hand of the user stops, the first-level option at this moment is selected. Here, the display of the menu set may be shifted according to a right or left motion of the hand of the user. In other words, when the user moves the hand to the right, the menu set displayed in the center may be shifted to the right, so that the menu set displayed on the left until then may be displayed in the center. When the user moves the hand to the left, the menu set displayed in the center may be shifted to the left, so that the menu set displayed on the right until then may be displayed in the center. This makes it possible to provide a user interface more intuitive for the user.

On the other hand, when determining that the hand is not shifted to the right or left from the state in the previous frame (step S413), the multimedia apparatus returns to the standby state (step S401).

Alternatively, when determining the state 1 in step S407, and when determining that a finger is tilted from a state in a previous frame (step S408), the multimedia apparatus recognizes this result as a third gesture (step S409). When recognizing the third gesture, the multimedia apparatus changes the selection state of the second-level option (scrolls the second-level option) in the menu set (step S410), as illustrated in screen 303 of Fig. 4.

Specifically, assume that the digital terrestrial broadcasting is selected as the first-level option in the menu set as illustrated in screen 303 of Fig. 4, at the time when the third gesture is recognized. In this first-level option, the broadcast stations of the digital terrestrial broadcasting are displayed as the second-level options. Examples of the second-level options include NHK, ABC, TBS, and FUJI. Each time the third gesture is repeated, the selection state of the broadcast station is changed. Selection of a certain second-level option (broadcast station) may be highlighted, for example, by displaying this broadcast station in a color different from those of other broadcast stations, or in a frame indicating the state of being selected. Here, the selection of the second-level option may be changed according to the direction of a right or left motion of the finger of the user. In other words, the selection of the second-level option may be changed to a rightward direction (in a clockwise direction) when the user moves the finger to the right. The selection of the second-level option may be changed to a leftward direction (in a counterclockwise direction) when the user moves the finger to the left. This makes it possible to provide a user interface more intuitive for the user.

On the other hand, when determining that the finger is not tilted from the state in the previous frame (step S408), the multimedia apparatus returns to the standby state (step S401).

Alternatively, when determining the state 0 in step S407, the multimedia apparatus recognizes this result as a fourth gesture (step S411). When recognizing the fourth gesture, the multimedia apparatus determines the selected option (step S412), as illustrated in screen 304 of Fig. 4.

Specifically, as illustrated in screen 304 of Fig. 4, the multimedia apparatus determines that the highlighted second-level option is selected, and displays a broadcast program related to the broadcast station. Here, to notify the user of the fact that the gesture of the determination is recognized, the multimedia apparatus may display this fact on the screen. For example, the recognition of the determination may be notified to the user, by displaying "OK" as illustrated in screen 304.

Fig. 6 is a schematic diagram illustrating an input device used in the second embodiment when the screen transition in Fig. 4 is performed. In the second embodiment, a remote controller is used as the input device.

Remote controller 500 includes menu key 501, cross key 502, back key 503, next key 504, and OK key 505, as illustrated in Fig. 6. Elements such as other buttons of remote controller 500 in Fig. 6 are omitted for simplification, but may be included in remote controller 500. Remote controller 500 wirelessly communicates with signal acquisition unit 202. Specifically, when menu key 501 is pressed by the user, remote controller 500 transmits a signal unique to menu key 501. Signal acquisition unit 202 receives the signal transmitted by remote controller 500.

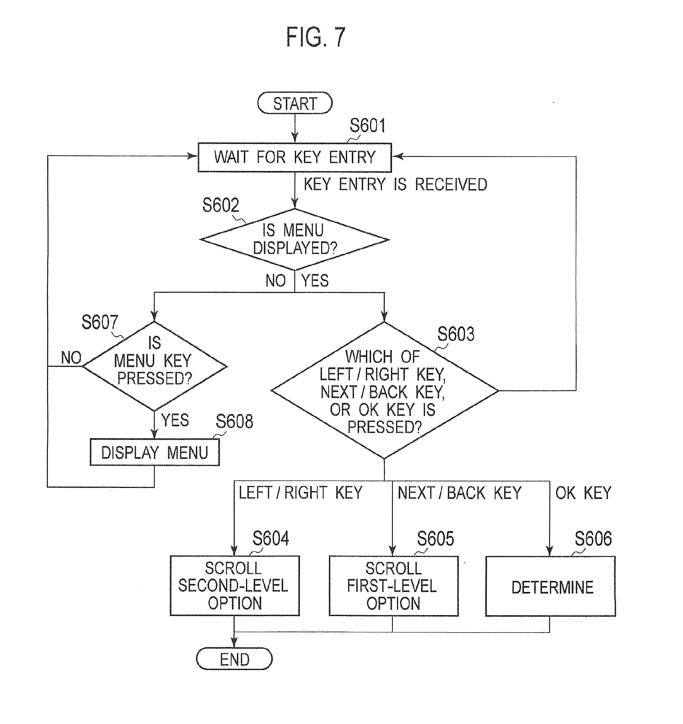

Fig. 7 is a flowchart for describing operation of the multimedia apparatus of the second embodiment illustrated in Fig. 2, in connection with the screen transition example in Fig. 4.

For example, the multimedia apparatus repeats this operation at predetermined time intervals, while remaining turned on.

First, the multimedia apparatus waits until there is a key entry of remote controller 500 from the user (step S601). This state is referred to as a standby state. Next, when detecting the key entry, the multimedia apparatus determines whether a menu is displayed (step S602). When determining that a menu is not displayed, the multimedia apparatus then determines whether menu key 501 is pressed (step S607). When menu key 501 is pressed, the multimedia apparatus displays a menu (step S607). On the other hand, when a key other than menu key 501 is pressed, the multimedia apparatus returns to the standby state.

When determining that a menu is displayed in step S603, the multimedia apparatus then determines if the pressed key is a left key/a right key of cross key 502, next key 504/back key 503, or OK key 505 (step S603). When determining that next key 504 or back key 503 is pressed, the multimedia apparatus changes the selection state of the first-level option (scrolls the first-level option) in the menu set, as illustrated in screen 302 of Fig. 4 (step S605). Here, a specific example similar to that of the first embodiment can be used for the changing of the selection state of the first-level option, and therefore is not described.

Alternatively, when determining that the pressed key is the right key or the left key of cross key 502 in step S603, the multimedia apparatus changes the selection state of the second-level option (scrolls the second-level option), as illustrated in screen 303 of Fig. 4 (step S604). Here, a specific example similar to that of the first embodiment can be used for the changing of the second-level option, and therefore is not described.

Alternatively, when determining that the pressed key is OK key 505 in step S603, the multimedia apparatus determines the selected option, as illustrated in screen 304 of Fig. 4 (step S606). Here, a specific example similar to that of the first embodiment can be used for the determination of the selected option, and therefore is not described.

In the above-described embodiments, the processing is performed in the following order. After the menu set is displayed, the first-level option is selected first, the second-level option is selected next, and then the manipulation instruction is determined. However, the multimedia apparatuses of the present embodiments can be implemented without being limited to this order. For example, the first-level option may be already selected at the time when the menu set is displayed. From this already-selected first-level option, the user can select the second-level option with cross key 502 by operating remote controller 500, without performing manipulation for selecting the first-level option. Further, the first-level option and the second-level option may be already selected at the time when the menu set is displayed. In this case, the user can determine the manipulation instruction by pressing OK key 505 of remote controller 500, without performing manipulation for selecting the first-level option and the second-level option.

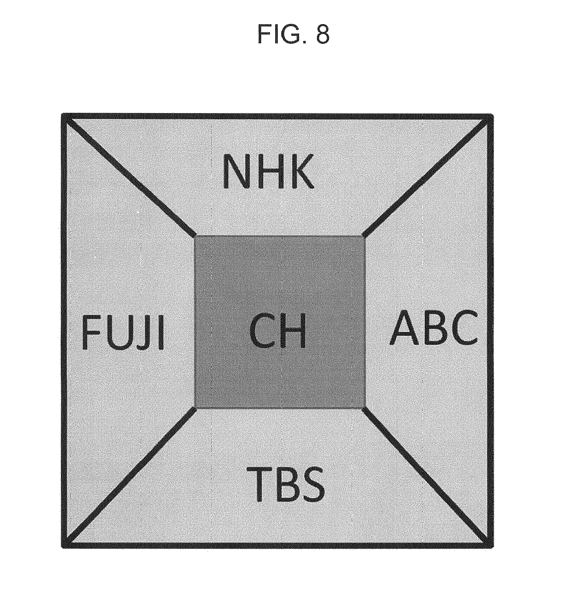

Fig. 8 is a diagram illustrating another example of displaying the menu set. This menu set displays the first-level option such as a function name in the center, and displays the second-level options such as function contents, around the center. The menu set in Fig. 8 is shaped like a polygon, and displays "CH", namely, channel, as the first-level option in a central polygon. An outer polygon is further provided outside the central polygon, and divided to display the second-level options. A quadrangle is used in the example of Fig. 8, but this is not limitative. A triangle, a pentagon, a hexagon, a heptagon, and the like can be used.

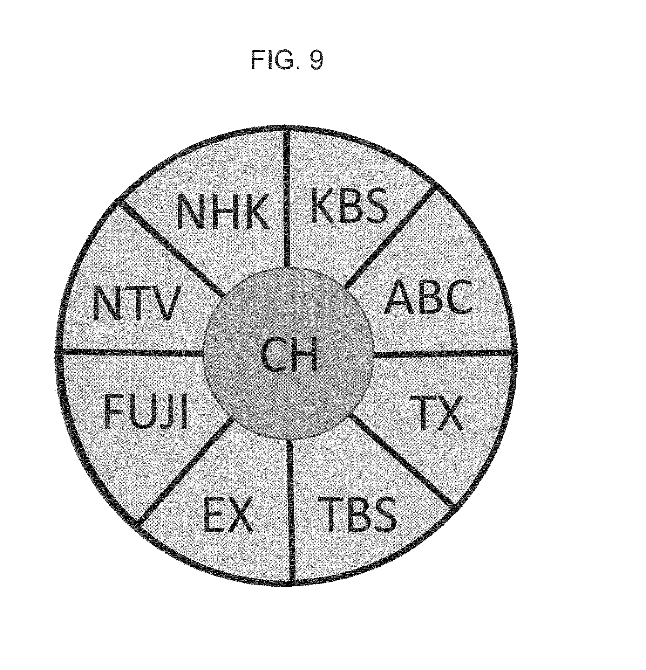

Fig. 9 is a diagram illustrating yet another example of displaying the menu set. This menu set displays the first-level option such as a function name in the center, and displays the second-level options such as function contents, around the center. Here, in the example of Fig. 9, the number of second-level options is eight. However, the number of second-level options may be two, three, four, five, six, or seven, without being limited to eight.

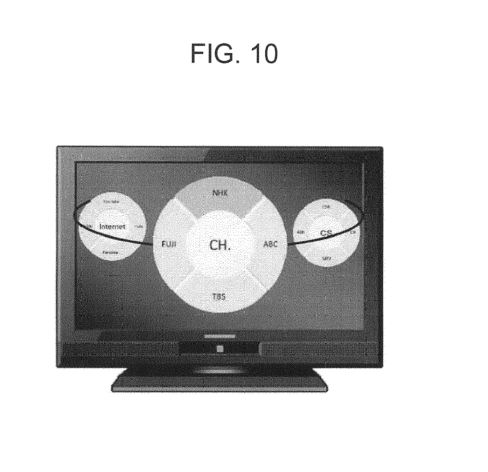

Fig. 10 is an example of displaying a case in which a menu set related to one first-level option is selected from menu sets. As illustrated in Fig. 10, a selected menu set is displayed in the center, and among not-selected menu sets, two menu sets next to the selected menu set are displayed on the left and the right, respectively. Here, in the example of Fig. 10, the selected menu set in the center is displayed in an enlarged manner as compared with the not-selected menu sets on the right and the left. This makes it easy to recognize which one is the selected menu set, and can improve visibility of the second-level options in the selected menu set. In the example of Fig. 10, one of the not-selected menu sets is displayed on each of the right and the left, but this is not limitative. Alternatively, any number of not-selected menu sets such as two and three may be displayed on each of the right and the left.

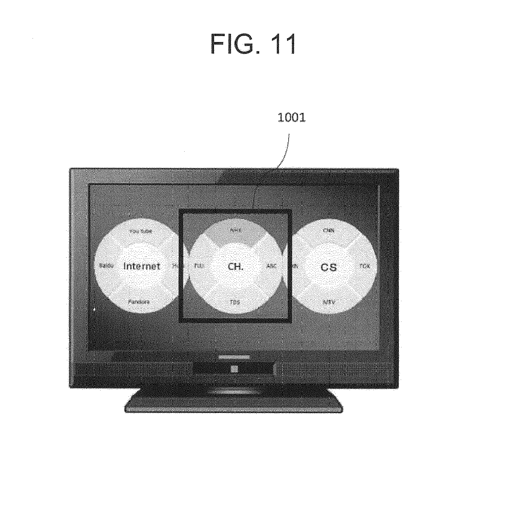

Fig. 11 is another example of displaying a case in which a menu set related to one first-level option is selected from menu sets. As illustrated in Fig. 11, a selected menu set is displayed in the center, and not-selected menu sets are displayed on the right and the left. In the example of Fig. 11, surrounding line 1001 is displayed around the selected menu set in the center, to display the state of being selected. This can make it easy to recognize which one is the selected menu set.

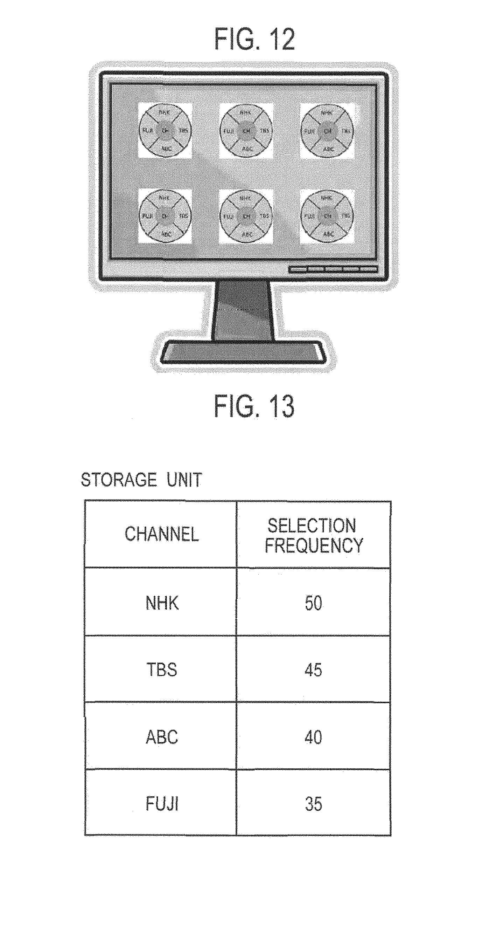

Fig. 12 is another embodiment of displaying two or more menu sets. In the examples of Figs. 10 and 11, the three menu sets are displayed. A display unit in Fig. 12 displays six menu sets. The present embodiment can display any number of menu sets such as four, five, and seven, without being limited to six. When the number of menu sets is small, perspicuity improves and therefore, the user can easily make a selection.

Fig. 13 is a table of data stored in storage unit 106 or 206. Menu-set operation control unit 105 or 205 stores how many times the user selects each second-level option. Each time the user selects the second-level option, the frequency of selection of the second-level option stored in storage unit 106 or 206 is incremented. Storing this frequency of selection in storage unit 106 or 206 allows the user to understand which second-level option is frequently selected. Menu-set operation control unit 105 or 205 arranges and displays a second-level option selected more frequently than other second-level options, at an easy-to-select position based on this stored frequency of selection. Here, in the example of Fig. 13, storage unit 106 or 206 stores the number of times the user selects the channel.

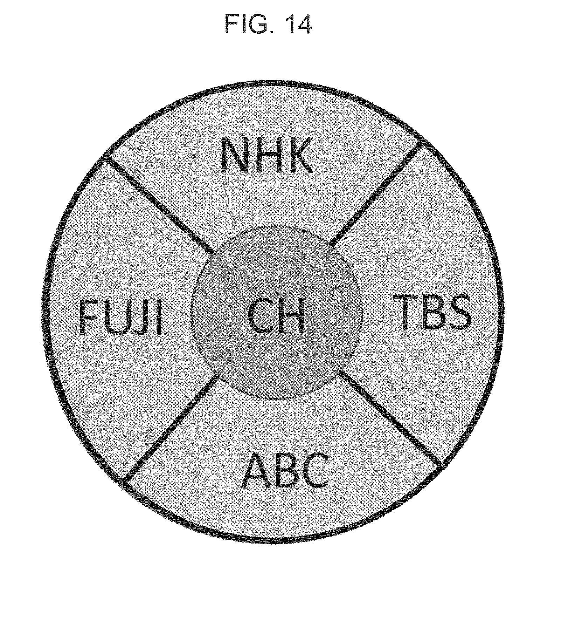

Fig. 14 is an example of displaying a menu set in which a frequently selected second-level option is arranged and displayed at an easy-to-select position. With reference also to Fig. 1 and Fig. 2, menu-set operation control unit 105 or 205 stores the frequency of selection of each second-level option, in storage unit 106 or 206. In the example of Fig. 14, display unit 108 or 208 displays a most-frequently selected second-level option arranged in an upper part of a circle and other second-level options arranged clockwise in decreasing order of frequency of selection, based on this stored frequency of selection. Here, it is conceivable that the easy-to-select positions may vary among multimedia apparatuses. Therefore, the way of displaying the menu set is not limited to displaying the most-frequently selected second-level option in the upper part of the circle. The position to display the most-frequently selected second-level option and the order of displaying the second-level options may be changed. For example, the most-frequently selected second-level option may be arranged in a lower, right, or left part of the circle.

For the multimedia apparatuses of the present embodiments, the control technique related to changing of the broadcast station (channel) is described, but an applicable range of the present embodiments is not limited thereto. In other words, the above-described embodiments can be implemented for anything related to control and manipulation of the multimedia apparatus. For example, the first-level option may be Internet connection and the second-level option may be a web page to view. The above-described embodiments are also applicable to power-off of the multimedia apparatus, volume adjustment of the multimedia apparatus, and display adjustment such as brightness, contrast, chromaticity, and chroma of the multimedia apparatus.

Hardware logic may be employed to configure image input unit 102 of an image input device, gesture recognition unit 103, result acquisition unit 104, menu-set operation control unit 105, storage unit 106, and command generation unit 107 of the multimedia apparatus of the first embodiment, for example. Alternatively, software may be employed as follows, using a CPU.

Specifically, the multimedia apparatus may include a CPU executing instructions of a control program for implementing each function, a ROM storing the program, a RAM for expansion of the program, and a storage device (a recording medium) such as a memory storing the program and various kinds of data. The multimedia apparatus may be supplied with the recording medium that stores a computer-readable program code (including an executable program, an intermediate code program, and a source program) for implementing the function of each unit described above. The CPU reads the program code recorded in the recording medium and executes the read program code. The above-described embodiments can also be thus implemented.

Examples that can be used for the above-described recording medium include a tape type such as magnetic tape and cassette tape; and a disk type including magnetic disks such as floppy (registered trademark) disk and hard disk, as well as optical disks such as CD-ROM, MO, MD, DVD, and CD-R. The examples further include a card type such as IC card (including memory card) and optical card; and a semiconductor type such as mask ROM, EPROM, EEPROM, and flash ROM.

In addition, the above-described units may each be configured to be capable of connecting to a communication network, and the above-described program code may be supplied via the communication network. Examples that can be used for the communication network include the Internet, intranet, extranet, LAN, ISDN, VAN, CATV communication network, virtual private network, telephone network, mobile communication network, and satellite communication network, without being limited in particular. Moreover, a transmission medium of the communication network is not limited in particular, and may be wired or wireless. The wired type uses, for example, IEEE 1394, USB, power-line carrier, cable television line, telephone line, ADSL line, or the like. The wireless type uses, for example, infrared rays of IrDA or remote controller, Bluetooth (registered trademark), IEEE 802.11, HDR, mobile telephone network, satellite channel, terrestrial digital network, or the like. The invention can also be implemented in a form of computer data signal buried in a carrier wave, in which electronic transmission embodies the above-described program code.

According to the above-described embodiments, a user interface, which is simple and intuitive for a user while maintaining a visually satisfactory condition, can be provided even when the user interface displays a large number of options to be selected by the user.

The invention includes other embodiments not deviating from the gist thereof, besides the above-described embodiments. The embodiments describe the invention, without limiting the scope thereof. The scope of the invention is provided in the claims, not in the detailed description of the invention. Therefore, the invention includes all forms including meanings and ranges in a scope equivalent to the claims.

These embodiments can be used for a television, a mobile phone, a smartphone, a game console, a digital camera, a security gate (a door), and the like.

## Claims

1. A multimedia apparatus comprising:
a storage unit configured to store a correspondence between a type of a manipulation instruction to be provided by a user and processing to be performed by the multimedia apparatus when the manipulation instruction is provided;
a menu-set operation control unit configured
to receive directly or indirectly the manipulation instruction provided by the user,
to provide an instruction for displaying a menu set, when the received manipulation instruction matches with a first manipulation stored in the storage unit,
to provide an instruction for changing a selection state of a first-level option in the menu set, when the manipulation instruction matches with a second manipulation stored in the storage unit,
to provide, when the manipulation instruction matches with a third manipulation stored in the storage unit, an instruction for changing a selection state of a second-level option which is of a narrower concept than a first-level option being currently selected, and
to provide an instruction for determining the second-level option, when the manipulation instruction matches with a fourth manipulation stored in the storage unit;
a command generation unit configured to control display in response to the instruction provided by the menu-set operation control unit, and to generate a command for causing operation or display related to the determined second-level option; and
a display unit configured to perform the operation or display based on the command generated by the command generation unit,
wherein the menu set is electronically rendered on the display unit such that a name of the first-level option indicating a function of the multimedia apparatus is displayed in a center, and a name of the second-level option which is of the narrower concept than the first-level option is displayed around the center.

2. The multimedia apparatus according to claim 1, wherein the manipulation instruction to be provided by the user includes a gesture to be performed by the user.

3. The multimedia apparatus according to claims 1 or 2, wherein the menu-set operation control unit provides an instruction for displaying menu sets, and displaying a selected menu set in a center of the display unit.

4. The multimedia apparatus according to claims 1 or 2, wherein the menu-set operation control unit provides an instruction for displaying menu sets and displaying a selected menu set in an enlarged manner as compared with a not-selected menu set.

5. The multimedia apparatus according to claims 1 or 2, wherein the menu-set operation control unit provides an instruction for displaying menu sets and displaying a line surrounding a selected menu set.

6. A computer-implemented method of controlling a multimedia apparatus, the method comprising:
receiving a manipulation instruction from a user directly or indirectly;
instructing a display unit to display a menu set, when the received manipulation instruction matches with a first manipulation stored in a storage unit, the storage unit storing a correspondence between a type of a manipulation instruction to be provided by a user and processing to be performed by the multimedia apparatus when the manipulation instruction is provided;
providing an instruction for changing a selection state of a first-level option in the menu set, when the manipulation instruction matches with a second manipulation stored in the storage unit;
providing, when the manipulation instruction matches with a third manipulation stored in the storage unit, an instruction for changing a selection state of a second-level option which is of a narrower concept than the first-level option being currently selected;
providing an instruction for determining the second-level option, when the manipulation instruction matches with a fourth manipulation stored in the storage unit;
controlling display in response to the instruction, and generating a command for causing operation or display related to the determined second-level option; and
causing operation or display on the display unit, based on the generated command,
wherein the menu set is electronically rendered on the display unit such that a name of the first-level option indicating a function of the multimedia apparatus is displayed in a center, and a name of the second-level option which is of the narrower concept than the first-level option is displayed around the center.

7. A program of controlling a multimedia apparatus, the program comprising a command configured to cause the multimedia apparatus to execute the method according to claim 6.
